# EUROPEAN PATENT APPLICATION

(11) **EP 1 111 913 A1**
(43) Date of publication of application: **27.06.2001**
(21) Application number: 00311296.8
(22) Date of filing: 18.12.2000
(51) Int. Cl.: H04N 5/445, H04N 7/173, H04B 1/20

(54) **Equipment control system**

(30) Priority: 23.12.1999 EP 99310558
(71) Applicant: Two Way TV Limited, Avonmore Road, London W14 8TS (GB)
(72) Inventor: Walton, Anthony Stephen, Staines, Middlesex, TW18 3QP (GB); Hilton, Peter, London, N8 9NE (GB)
(74) Representative: Skone James, Robert Edmund

(57) **Abstract**

A control system for controlling the operation of equipment such as a television and VCR via remotely generated signals in accordance with a first protocol. The system includes one or more remote controllers (22,24) for generating equipment control signals in accordance with a second protocol. An STB (9) includes a sensor for detecting control signals from the remote controllers, and a signal generator (27) for generating and transmitting corresponding equipment control signals using the first protocol to the equipment. The STB causes the appearance of the remote controller for the equipment to be displayed on a display. The remote controller of the control system allows a user to interact with the display to select a control instruction from the displayed equipment remote controller.

## Description

The invention relates to a control system for controlling the operation of equipment which is controlled by remotely generated signals.

Equipment such as televisions (TVs), video cassette recorders (VCRs), hi-fi and the like were originally designed to be controlled by on-board control buttons which were operated manually. More recently, remotely controlled equipment has been developed in which the equipment has been provided with a signal detector such as an infra-red sensor while control buttons for controlling operation of the equipment have been provided in a small remote control unit which is usually handheld. This is convenient for users who are able to control the equipment remotely. The remote controller generates a unique, usually infra-red, signal which is received by the equipment sensor and then translated into a control action. Examples include turning equipment on and off, selecting a television channel and carrying out the usual functions of a VCR. Recently, many more sophisticated functions have also been provided on remote controllers.

A problem has arisen in that each equipment manufacturer has developed its own protocol for encoding the signals transmitted by the remote controller. This means that each piece of equipment requires its own remote controller. Some simplification has become possible where particular manufacturers have rationalised the protocols of their own different types of equipment so that each can be controlled from a single remote controller (for example, TV and VCR) but there is still no compatibility between remote controllers and equipment from different manufacturers.

Some attempts have been made to construct universal remote controllers. This has become possible because each manufacturer has published their protocols so these are available to remote controller manufacturers. The universal remote controllers are loaded with every or most of these protocols. In order to implement a universal remote controller, the user has to indicate in some way which manufacturer his equipment was made by and then the universal remote controller selects the appropriate protocol.

There are a number of disadvantages with these conventional universal remote controllers. Firstly, each must be loaded with the protocols of all manufacturers. This information is time consuming to obtain and keep updated.

A second problem is that if the user decides to upgrade his equipment, the relevant new control protocol may not be available in his universal remote controller. Consequently, he needs to purchase a new universal remote controller.

One way of addressing these problems is to provide a controller capable of downloading the respective protocols. An example is described in WO98/23088 which provides an additional static control device which can be controlled by a dedicated remote control unit. The control device is fitted with an infra-red blaster for transmitting the appropriate control signals to the respective equipment such as a TV and VCR. The control protocols for the equipment are stored in the control device which is incorporated into a "set top box" (STB) of a cable TV system. The relevant control protocols for the equipment are received from the headend of the cable system.

WO94/21081 and WO96/13933 describe a similar system for timed recording of TV programmes on a VCR in which a control device is incorporated into one of a TV, VCR or STB.

However, there are additional problems with universal remote controllers in that many users find them difficult to operate due to the various controller modes required in controlling the different types of equipment. This is a particular problem for infrequent users of such controllers.

US-A-5949407 discloses a method of controlling equipment using a menu-driven pointer system. The menus and pointer are provided on a TV screen by a control device operated by a single remote controller with a simplified design having only a few functions.

However, the menu options available are generally predefined, although some are designed for customising by the user, for example by entering descriptive text relating to the selected option. If an equivalent function is to be entered for each function provided by the manufacturer's remote controller, then this may require considerable effort. In addition, the original manufacturer's remote controller is also needed to transmit the appropriate code for each option to the control device such that it can be stored.

In accordance with the present invention we provide a control system for controlling the operation of equipment which is controlled by remotely generated signals in accordance with a first protocol, the system comprising:
a remote controller for generating equipment control signals in accordance with a second protocol; and
control apparatus including a detection system for detecting control signals generated by the remote controller and a signal generator for generating and transmitting corresponding equipment control signals in accordance with the first protocol for receipt by a remote receiver of the equipment;
wherein at least one of the equipment or the control apparatus further comprises a display,
wherein the signal generator includes a processor for causing the appearance of at least part of an equipment remote controller designed to operate the equipment directly using signals according to the first protocol, to be displayed on the display,
and wherein the remote controller of the control system includes a selector for selecting a desired control instruction from the displayed remote controller.

The equipment is operated by providing an image on the display that is recognisable as that of the manufacturer's specified remote controller for the particular equipment.

Typically the equipment remote controller will have a control face presenting an arrangement of control elements and the processor will cause the appearance of at least part of the control face to be displayed on the display. Preferably, the appearance of the whole control face will be displayed. A number of possible views may be provided, such as a plan view or a perspective view and these may be views of either the control face alone or more generally of the equipment remote controller. The appearance on the display will be recognisable by a user as being that of the equipment remote controller. This may be achieved using realistic images for example of photographic quality, or more stylised artistic representations.

Typically the selector will be adapted to control the display of a cursor for interaction with the image. The display of at least part of a remote controller can be achieved if an image or images such as a bit maps defining that appearance are stored within the control apparatus.

An intermediate control apparatus may be used to convert control signals supplied from the remote controller in accordance with a second protocol into control signals in accordance with the appropriate first protocol, which can then control the equipment.

The advantage of this is that the construction of the remote controller can be simplified and thus its cost reduced over conventional universal remote controllers with the complexity being transferred to the control apparatus. This results in an overall reduction of cost when typically there may be several remote controllers associated with a single control apparatus. In addition, there is no overall loss in functionality between the control system of the present invention and the equipment remote controller provided by the manufacturer. The equipment remote controller can be therefore completely replaced, allowing the equipment to remain operable if the equipment remote controller becomes lost or broken.

Advantageously, users familiar with the original remote controllers of the equipment will easily adapt to its use due to the representation of the equipment remote controller on the display. All users also benefit in that a simplified remote controller can be used with the number of control keys or buttons on the remote controller reduced significantly even to those just sufficient to control the display of a cursor. Typically, however, the remote controller will include some basic function control buttons for example on/off, channel select and volume together with a cursor controller. Reducing the number of control buttons is particularly advantageous when a number of different pieces of equipment are to be controlled. In contrast, conventional universal controllers have been provided with numerous buttons, many of which having different functions under different controller modes.

The control apparatus may be conveniently located in a "set top box" (STB) supplied for other purposes such as to enable the receipt of digital television signals and/or interactive TV. Of course, the control apparatus could form an integral part of the piece of equipment.

The signal generator could apply a pre-stored algorithm to convert signals in accordance with the second protocol into those in accordance with the first protocol but conveniently the signal generator includes a memory for storing data defining a concordance between signals according to the first and second protocols.

The control apparatus could constitute a stand-alone apparatus which is pre-loaded with the algorithm or concordance data and updating could be achieved by manually loading further data or software. However, the invention is particularly suitable for use with a system which further includes a data base remote from the control apparatus for storing data relating to control signals in accordance with the first protocol, the signal generator being adapted to receive said data from the remote data base and to store the data in the memory. The image(s) of the equipment remote controller will be preferably downloaded from the remote database at the same time as the corresponding first protocol data.

The advantage of this feature is that the construction of the control apparatus itself can be simplified so that it only needs to store concordance data relevant to the particular equipment which it must control while all the first protocol data relating to different manufacturers and different equipment is stored centrally at the remote database. This results in a very significant reduction in cost of both the remote controllers and control apparatus since only one database of first protocols needs to be maintained.

Any updates can easily be transmitted from the remote database, for example via any conventional communication medium, thus making it very easy to upgrade equipment locally or to take advantage of new or more sophisticated protocols. A further advantage is that when new genres of equipment become available (as was the case in recent years for DVD players) it is a simple task to update the system with the corresponding equipment remote controller image and related data. This flexibility allows great scope for the addition or replacement of equipment and is reliant only upon the use of a similar method of transmitting signals, such as by infra-red.

The signal generator may be coupled to the remote database by a communication medium chosen from the group comprising TV broadcast, cable, satellite, Internet and telephone communication systems.

In some cases, the remote database could be adapted regularly to transmit data defining all its first protocols, the control apparatus being adapted to monitor for those which it requires and then to download that data as appropriate. However, in order to reduce the amount of data being transmitted, the signal generator may be adapted to indicate to the remote database which of the first protocols it requires. Typically, this would occur on a dedicated link such as a telephone line but could also be carried out on different communication medium such as a cable or other system over which the data is transmitted.

An example of a control system according to the invention will now be described with reference to the accompanying drawings, in which:
Figure 1 is a schematic block diagram of an interactive television system including an example of a control system according to the invention;
Figure 2 is a schematic view of a remote controller;
Figure 3 is a schematic view of a display of a remote controller; and
Figure 4 is a schematic view of a display of a remote controller illustrated in perspective.

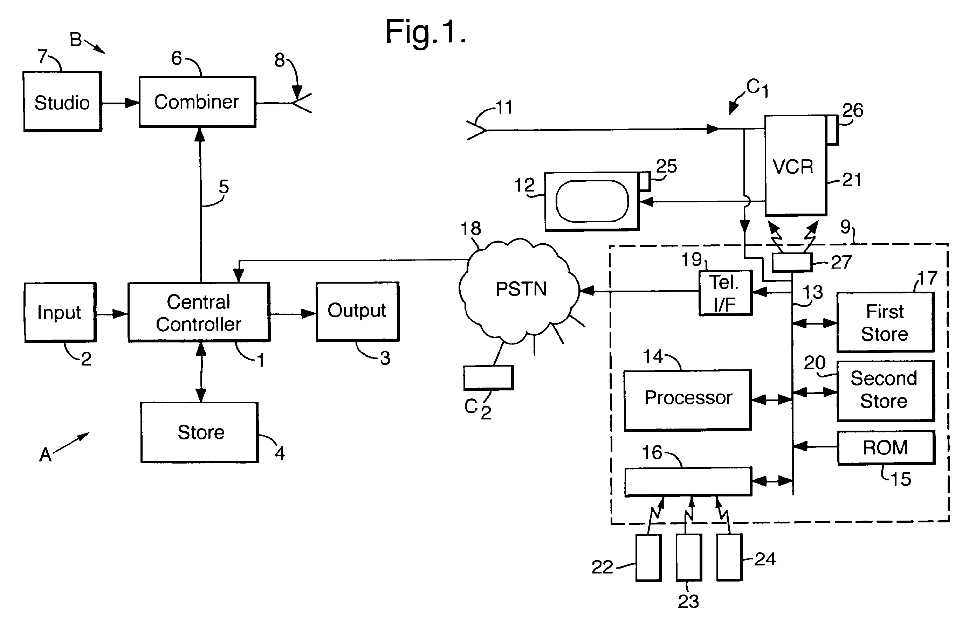

The interactive broadcast network shown in Figure 1 comprises a central control system A at a central location and including a central controller 1 which will include a computer such as a PC operating a Windows based system, connected to an input device 2 such as a keyboard and/or mouse and the like and to an output device 3 which may include a monitor and/or printer. A store 4 stores data relating to service functions and remote users, which can be accessed and amended by the central controller 1. The central controller 1 generates TV display signals and other control signals associated with various service functions on a land line 5 connected to a combining unit 6 of a TV broadcast system B. The combining unit 6 receives television broadcast signals from a studio 7 which, in the case of a live event, will have originated from outside broadcast cameras, and combines these with the signals on the line 5 so that they are transmitted simultaneously by a transmitter 8 to remote users or players C₁, C₂ ... The users will typically be remote not only from the system B but also from each other.

The signals supplied to the combiner 6 may be transmitted to the remote units within a vertical blanking interval (VBI) of the normal TV signal or on a separate radio FM-SCA channel or other data format such as a cable modem.

Other forms of transmission including satellite, cable and the internet may also be used to send signals to the remote users C.

Each remote user C₁,C₂..., only one shown in detail in Figure 1, has a home or remote unit 9 in the form of a set top box (STB), an aerial 11, a monitor 12, and a VCR 21 connected to the aerial 11 and the monitor 12. The home unit 9 includes an address/data bus 13 connected to the aerial 11, the bus 13 being connected to a microprocessor 14, a ROM 15 storing programme instructions for the processor 14, an infra-red receiver 16, a first store (RAM) 17 for storing data supplied from the central controller 1, and a second signal store (RAM) 20 for storing data defining the identity of the remote unit 9 and the services to which the remote user has subscribed. Signals transmitted by the processor 14 can be communicated to the central controller 1 via a public switched telephone network 18 which is selectively accessed by a telephone interface unit 19 connected to the bus 13. Other media may be used for the return transmission including TV broadcast, cable, satellite and the Internet. In general the return signal medium will be different from the medium used to transmit to the remote user C.

The components are controlled from a number of remote controllers 22-24 each of which generates infra-red signals in accordance with a "second" protocol following depression of appropriate control buttons to be described below, those infra-red signals being received by the receiver 16 and converted into electronic signals which are supplied to the bus 13. The manner in which more than one remote controller 22-24 can be used with the same receiver 16 is described in more detail in EP-A-0921657 (USSN 09/203967) incorporated herein by reference. The remote controllers can be used both for controlling operation of the monitor 12 and VCR 21 as already described below and also for taking part in interactive applications such as interactive quiz shows and the like.

The monitor 12 and VCR 21 each include a respective infra-red sensor 25, 26 adapted to receive infra-red control signals from a remote source in accordance with a respective "first" protocol. Normally, these items of equipment would have been sold with proprietary remote controllers which can be used directly with those pieces of equipment to control them in accordance with corresponding proprietary first protocols. In the present case, however, the sensors 25, 26 receive control signals from an infra-red blaster 27 that is within the STB 9 and includes two infra-red LEDs.

The first store 17 which may be in the form of flash memory includes a look-up table which addressable directly by signals transmitted upon depressing dedicated buttons provided on the remote controllers 22-24 in accordance with the second protocol. Alternatively, the look-up table is addressed by the processor 14 in response to the selection by the user of a particular button on the displayed remote controller bitmap, described in more detail below.

The equivalent TV or VCR first protocol signals are retained at addresses in the store 17. The control signals which can be applied to the monitor, for example, include on/off, channel select and volume. Of course, there will be many other control signals as will be apparent to a person skilled in the art. Each of these control functions is defined either by a particular signal generated by the remote controllers 22-24 in accordance with the second protocol, or by the processor 14.

When a remote controller 22-24 generates one of these signals, for example a channel up command in accordance with the second protocol, this is received by the receiver 16 and converted to a corresponding electrical signal which is used by the processor 14 as an address into the look-up table (LUT) in the first store 17. The processor 14 recovers the corresponding TV first protocol control signal from the LUT which is then sent to the IR blaster 27 which outputs a corresponding infra-red signal. This will be received by the sensor 25 causing the monitor 12 to tune to the next higher channel.

If instead, the user wishes to operate the VCR 21, he may activate another button on the remote controller 22-24 such as a "play" button. Once again, this will cause the remote controller 22-24 to issue a uniquely coded IR signal in accordance with the second protocol which is received by the receiver 16, converted to electrical form and used by the processor 14 to address the look up table in the first store 17. The data at the addressed location in the look-up table is then used to control the IR blaster 27 to generate an IR signal with the appropriate code in accordance with the VCR first protocol, which is sensed by the sensor 26 which then controls the VCR 21 accordingly.

If the user wishes to activate a button which is not provided on the remote controller 22-24 but is present on the corresponding proprietary remote controller, the user may select this button using the remote controller 22-24 in accordance with a bit map image of the proprietary remote controller, as will now be described.

In order to enable all functions offered by a piece of equipment to be used even with a relatively simple remote controller, one or more bit maps are provided, defining the appearance of at least part of the proprietary remote controller for the equipment associated with the first protocol. The bit map may define the appearance of the whole of the proprietary remote controller when viewed for example in plan or in perspective. Alternatively a number of bit maps may be used defining the appearance of parts of the proprietary remote controller. These may be displayed individually or together.

Further data are also provided to relate the particular regions of each bitmap to the corresponding first protocol control signals which would normally be transmitted by the proprietary remote controller. These data may be conveniently provided as a part of the look-up table and, along with the bit maps to which they relate, are stored in the first store 17. In response to appropriate control instructions from the remote controllers 22-24, the bit maps(s) are displayed on the monitor 12.

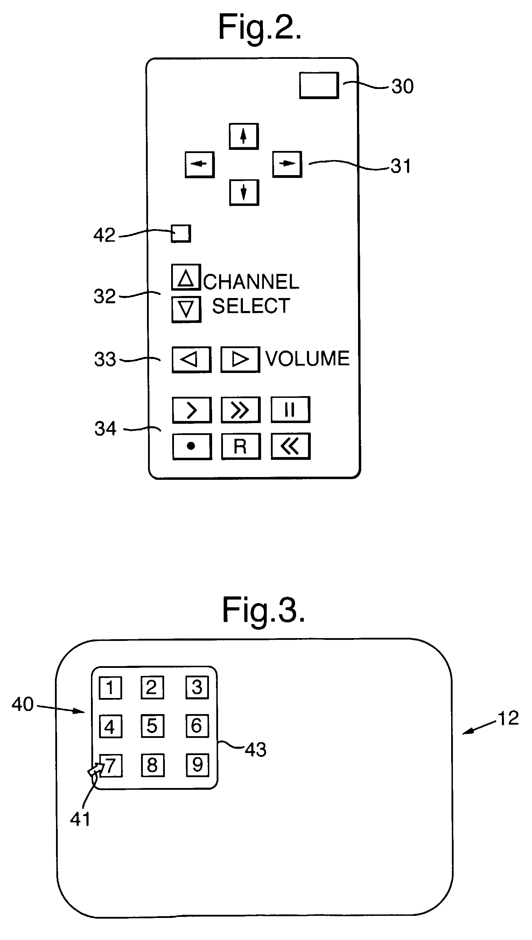

Figure 2 illustrates an example of a remote controller 22-24 which can be used in this latter implementation. As can be seen, the remote controller 22-24 has a standby button 30, cursor control buttons 31, channel select buttons 32, volume control buttons 33 and VCR control buttons 34. However, the remote controller 22-24 does not include specific channel selection buttons defining channels by name or number. It also does not include any higher level functions typically offered by VCR manufacturers, for example a "dubbing mode".

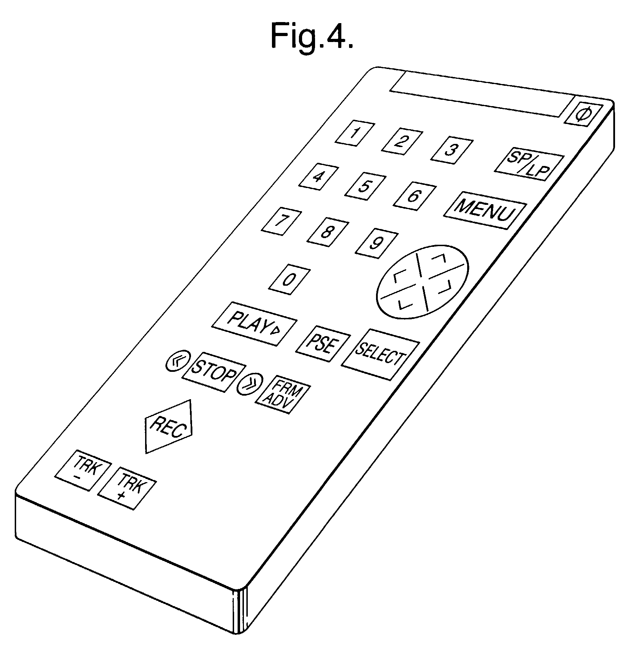

However, in cooperation with the processor 14, the remote controller 22-24 can be used to cause a recognisable image of at least part of the proprietary remote controller 43 to be displayed on the display 12 as shown in Figure 3. In this case, a bit map image of a 9 button keypad 40 of the proprietary remote controller is retrieved from the first store 17 and displayed on the monitor 12 by the processor 14, along with a controllable cursor 41. In this example the bit map image is displayed only for a predetermined period. Figure 4 shows an alternative example in which an image of a perspective view of the proprietary remote controller is displayed on the monitor 12.

Each bit map has a predetermined size in terms of rows and columns of image data. The processor 14 controls the size and position of the bit map display upon the monitor 12 in accordance with a frame store and a display coordinate system. The bit map image can be scaled allowing the provision of a zoom function.

The associated data in the look-up table define distinct areas of the bit map. Each area will generally correspond to one of the proprietary remote controller buttons as represented within the bit map. The data relate each defined area of the bit map to the corresponding control signal (relating to the button represented) according to the first protocol.

The user can move the cursor 41 into alignment with any one of the 9 buttons of the keypad image using the cursor controls 31 of the remote controller 22-24. The processor 14 moves the cursor 41 on the monitor 12 in response to receiving the cursor control signals. To select the appropriate button on the bit map, the user presses an action button 42 on the remote controller 22-24. Using the coordinates of the cursor the processor 14 then calculates the part of the bit map to which the cursor is pointing. The look-up table in the first store 17 is then interrogated and if the cursor position is found to fall within one of the defined areas of the bitmap, then the corresponding control signal according to the first protocol is extracted from the LUT and sent to the IR blaster 27. The corresponding equipment then interprets this signal as if it had been transmitted from the proprietary remote controller and performs the desired function accordingly.

The display of only a part of the bitmap enables more simple operation of the system and particularly benefits users with impaired vision, particularly if a zoom function is used. The cursor system may also be replaced by a control method in which the user repeatedly presses a button on the remote controller 22-24 causing the buttons on the remote controller bitmap to be highlighted in a predetermined order.

A number of bit maps may be provided for each proprietary remote controller. For example each may represent a single button or part of the remote controller such that when arranged on the monitor, a recognisable image of the proprietary remote controller is produced. In this case additional data may be provided to define the respective positions of the bit maps with respect to one another and such data may be also stored in the first store 17.

As mentioned above, although the look up table in the first store 17 could be loaded locally, the invention is particularly suitable for remote downloading of data into the look-up table. Thus, the store 4 of the central location is provided with up to date versions of all manufacturers protocols (i.e. all first protocols) and when a user wishes to control a new piece of equipment such as a new VCR, the processor 14 will cause a simple menu to be displayed on the monitor 12 allowing the user to select a "new equipment" routine. In this routine, the user will be prompted to indicate the name of the manufacturer of the equipment concerned and the equipment type or serial number. This information will be returned to the central location via the PSTN 18.

The central controller 1 will then extract from the store 4 the appropriate data defining the corresponding first protocol for that equipment, the associated bit map(s) and related data. These will be then transmitted together with a code identifying the STB 9 concerned. The STB 9 will then monitor for receipt of its unique identity code following which it will download the data and store it in the first store 17 in appropriate locations.

Following this download, a check can be made to ensure the correct codes have been stored. This is most easily achieved by causing the IR blaster to emit a standby code and then to check the equipment has entered the standby mode.

Subsequently, if new protocols are introduced by manufacturers these can be added to the store 4 very quickly so that if a user buys a new piece of equipment, recently introduced, he will immediately have access to the appropriate first protocol data.

Another advantage of the invention is that it enables complex processing operations which normally have to be performed by a user directly with his remote controller to be simplified. For example, many VCRs offer a "videoplus" or VCR preprogramming facility in which the user must enter a particular code number for a TV program which he wishes to record and the VCR then programs itself to switch on and switch off at the appropriate times. In one example of the present invention, where an electronic program guide (EPG) is transmitted from the central location, this will be transmitted in association with the corresponding video plus code numbers. An EPG is an electronic on screen listing of television programs, times and channels. A user can then view the EPG on the monitor 12 in a "programming" mode and select a TV program which he wishes to record simply by highlighting the monitor to indicate the appropriate program and pressing an enter button on his remote controller. The processor 14 can then generate the appropriate codes read from the EPG by obtaining the corresponding VCR first protocol infra-red coding required from the look up table in the first store 17 and then controlling the IR blaster 27 accordingly.

A further advantage of the invention is that communication between the remote controllers 22-24 and the STB 9 can be in accordance with a proprietary protocol enabling much higher bit rates to be achieved and with conventional remote controllers. For example, we have designed a protocol which can operate at 115K bits/second which should be compared with conventional remote controllers which operate at about 400 bits/second.

Although the use of infra-red radiation has been described, other forms of communication between the remote controllers and the STB 9 and between the STB 9 and the equipment could be used such as radio frequency, microwave or cable. Although the equipment described in this case includes a monitor and a VCR, other equipment could also be controlled from the STB such as Hi-Fi equipment and the like.

## Claims

1. A control system for controlling the operation of equipment which is controlled by remotely generated signals in accordance with a first protocol, the system comprising:
a remote controller for generating equipment control signals in accordance with a second protocol; and
control apparatus including a detection system for detecting control signals generated by the remote controller and a signal generator for generating and transmitting corresponding equipment control signals in accordance with the first protocol for receipt by a remote receiver of the equipment;
wherein at least one of the equipment or the control apparatus further comprises a display,
wherein the signal generator includes a processor for causing the appearance of at least part of an equipment remote controller designed to operate the equipment directly using signals according to the first protocol, to be displayed on the display,
and wherein the remote controller of the control system includes a selector for selecting a desired control instruction from the displayed equipment remote controller.

2. A system according to claim 1, wherein the equipment remote controller has a control face presenting an arrangement of control elements and wherein the processor causes the appearance of at least part of the control face to be displayed on the display.

3. A system according to claim 2, wherein the processor causes the appearance of the whole control face to be displayed.

4. A system according to any of the preceding claims, wherein the appearance is displayed as a perspective view.

5. A system according to any of the preceding claims, wherein the signal generator includes a memory for storing data defining a concordance between signals according to the first and second protocols.

6. A system according to claim 5, the system further including a data base remote from the control apparatus for storing data relating to control signals in accordance with the first protocol, the signal generator being adapted to receive said data from the remote data base and to store the data in the memory.

7. A system according to claim 6, wherein the signal generator is coupled to the remote database by a communication medium chosen from the group comprising TV broadcast, cable, satellite, Internet and telephone communication systems.

8. A system according to claim 6 or claim 7, wherein the remote database stores data defining signals corresponding to more than one first protocol.

9. A system according to claim 8, wherein each first protocol corresponds to a respective piece of equipment.

10. A system according to claim 8 or claim 9, wherein the signal generator is adapted to indicate to the remote database which of the first protocols it requires.

11. A system according to any of the preceding claims, wherein the remote controller has a number of keys, each corresponding to a respective control instruction.

12. A system according to any of the preceding claims, wherein the selector is adapted to control the display of a cursor on the display.

13. A system according to any of the preceding claims, wherein the control apparatus is provided in a separate unit, such as a set top box.

14. A system according to any of the preceding claims, wherein the remote controller communicates with the control apparatus via non-visible, preferably infra-red, radiation.

15. A system according to any of the preceding claims, wherein the signal generator transmits signals in the form of non-visible radiation, preferably infra-red.

16. A system according to any of the preceding claims, wherein the signals transmitted by the signal generator are adapted to control one or more of a television, video, or hi-fi equipment.
